Europäisches Patentamt

European Patent Office

Office européen des brevets

(11) Publication number: **0 323 868**
A1

# EUROPEAN PATENT APPLICATION

(21) Application number: **89200006.8**

(22) Date of filing: **02.01.89**

(51) Int. Cl.[4]: **B 23 F 5/16**
**B 23 F 21/10**

(30) Priority: **04.01.88 NL 8800003**

(43) Date of publication of application:
**12.07.89 Bulletin 89/28**

(84) Designated Contracting States:
**AT BE CH DE ES FR GB GR IT LI LU NL SE**

(71) Applicant: **HANKAMP B.V.**
**Buurserstraat 198**
**NL-7544 RG Enschede (NL)**

(72) Inventor: **Seroo, Jan Mathijs**
**6, Achelsedijk**
**B-3598 Bocholt (BE)**

**Cuypers, Martinus Hubertus**
**219, Penelopestraat**
**NL-5631 CM Eindhoven (NL)**

**Oude Maatman, Anthonius Johannes Hendrikus Maria**
**10, Pastoor Plegtstraat**
**NL-7573 GH Oldenzaal (NL)**

(74) Representative: **Reynvaan, Lambertus Johannes, Ir. et al**
**EXTERPATENT B.V. P.O. Box 90649**
**NL-2509 LP 's-Gravenhage (NL)**

A request for correction of the description has been filed pursuant to Rule 88 EPC. A decision on the request will be taken during the proceedings before the Examining Division (Guidelines for Examination in the EPO, A-V, 2.2).

(54) **Process for producing a crown wheel.**

(57) A process for producing a crown wheel (1) by means of a cutting tool (7) substantially in the form of a cylindrical gear which is suitable for meshing with said crown wheel. The toothing of the cutting tool being provided with a cutting edge with a clearance angle along one or both tooth flanks. During machining the tool is constantly in engagement with the crown wheel to be machined, the tool being placed in such a way that the axis of rotation (8) thereof crosses the axis of rotation (2) of the crown wheel at a specific distance and the tool has a slanted toothing system adapted to said distance. The relative speed between the tool and the crown wheel acting as cutting speed.

Fig. 1.

Description

## Process for producing a crown wheel.

The invention relates to a process for producing a crown wheel by means of a cutting tool in substantially the form of a cylindrical gear which is suitable for meshing with the crown wheel, and the toothing of which is provided with a cutting edge with clearance angle along one or both tooth flanks.

In engineering, a crown wheel is understood to mean a gear wheel which is intended for meshing with a cylindrical gear to form a transmission with the axes crossing or intersecting each other at an angle. At the same time the toothing of the cylindrical gear can be either straight or slanting.

Such crown wheels were hitherto produced by means of gear cutters in a conventional gear cutting machine or, for example, by an electrical spark eroding machine.

The cutting or spark eroding tool is of a shape which is virtually identical to that of the cylindrical pinion meshing with the crown wheel. Meshing with pinions which deviate slightly from the tool is possible only to a very limited extent. For this reason, the tool can be resharpened only to a very limited extent. These known production methods are therefore not suitable for mass production, where a short production time and long tool life are essential.

The object of the invention is now to provide a process which is suitable for the production of large series, without the above-mentioned disadvantages occurring.

This object is achieved according to the invention in that during machining the tool is constantly in engagement with the crown wheel to be machined, the tool being placed in such a way that the axis of rotation thereof crosses the axis of rotation of the crown wheel at a specific distance and the tool has a slanted toothing system adapted to said distance.

Due to the fact that the tool is placed off centre, i.e. the axis of the tool does not intersect the axis of the workpiece, during the meshing of the two "gears" a relative displacement occurs in the direction of the tooth space of the meshing teeth of the tool, relative to the touch flanks of the crown wheel. This relative displacement in fact forms the cutting speed of the tool.

It has to be noted that from DE-A-1.074.366 a method is known for producing a crown wheel, by means of a gear cutter which during said manufacturing process meshes with the workpiece. However, said known method aims to produce a crown wheel which only meshes with a pinion, the axis of which is displaced relative to the axis of the crown wheel. Moreover the gear cutter is substantially greater as the pinion which is intended to mesh with said crown wheel. So said known method cannot be used for producing a crown wheel having radially directed tooth spaces, which crown wheel is able to mesh with a pinion, the axes of which is intersecting the axis of the crown wheel.

In order to work the tooth flank of the crown wheel over the entire width, the tool according to the invention during the machining is displaced parallel to its axis of rotation in the direction of the line which connects the point of intersection of the pitch circle of the crown wheel and vertical projection of the axis of rotation of the tool to the axis of rotation of the crown wheel in a plane which is at right angles to the axis of rotation of the crown wheel.

Sub-claims 3-5 indicate further advantageous developments of the invention.

The invention is explained in greater detail with reference to the appended drawings, in which:

- Fig. 1 shows a schematic top view of a crown wheel to be machined, and a tool meshing therewith; and

Fig. 2 shows a detail of Fig. 1.

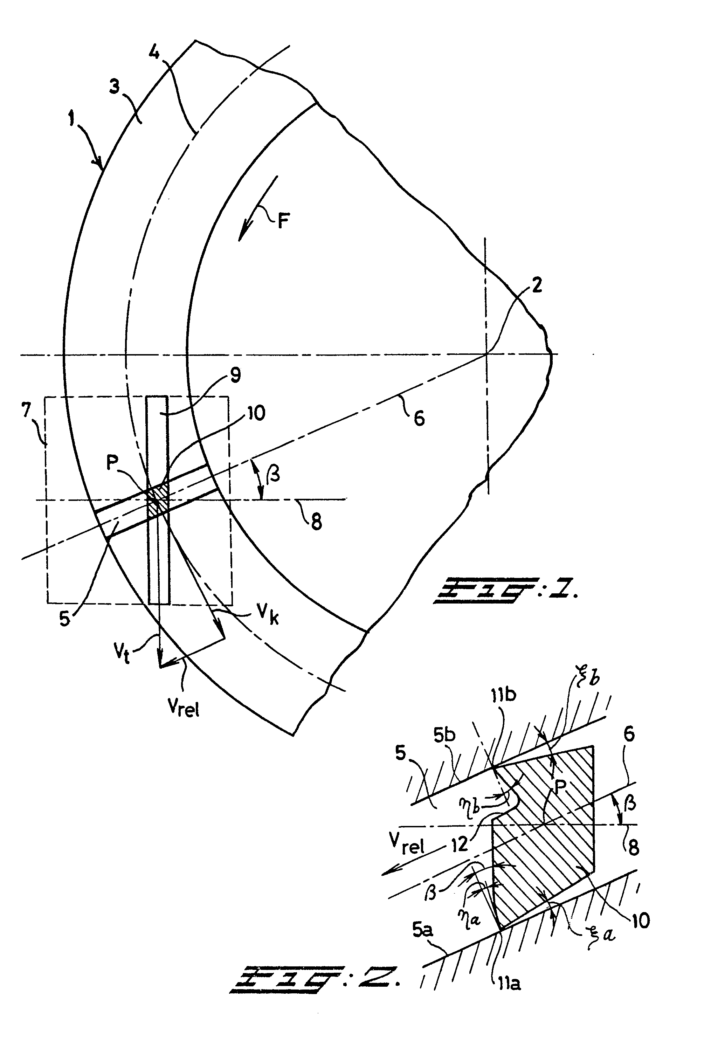

Fig. 1 shows schematically a top view of a crown wheel which is indicated in its entirety by the reference number 1.

The crown wheel 1 rotates about an axis of rotation 2 and has a toothing system 3 with a pitch circle 4. For a crown wheel which meshes with a pinion where the axes lie in one plane the pitch circle 4 can be defined as the circle with the axis of rotation as centre point, and with the radius being the distance between the axis of rotation 2 of the crown wheel and the point of intersection of the pitch cylinder of the pinion and the surface lne of the touching generating cones of the crown wheel and the pinion in the said plane through the two axes. The two generating cones have an apex which lies in the point of intersection of the two axes and roll mathematically accurately over one another.

Reference number 5 indicates a tooth space of the crown wheel which is directed radially, the centre lne 6 running through the axis of rotation 2.

A tool 7, indicated schematically by dotted lines is in the form of a pinion meshing with the crown wheel 1 and having an axis of rotation 8. The tool 7 comprises a number of thin disc-type elements, one of which is shown in the drawing and is indicated by the number 9.

As can be seen clearly from Fig. 1, the vertical projection of the axis of rotation 8 of the tool intersects the axis of rotation 2 of the crown wheel. The vertical projection of the axis of rotation 8 intersects the pitch circle 4 of the crown wheel in the point P. The tooth space of the crown wheel whose centre line also runs through the point P (tooth space 5 in Fig. 1) is engaged with a tooth 10 of the tool 7. In order to permit it to mesh with the crown wheel, the tool has a slanted toothing system, the tooth angle of which is equal to the angle β between the centre line 6 of the tooth space 5 and the vertical projection of the axis of rotation 8.

The cross section of the tooth 10 of the disc-type element present in the tooth gap 5 is hatched in Fig. 1 and is shown on an enlarged scale in Fig. 2. With a rotation of the crown wheel in the direction of the arrow F, at the point P the crown wheel has a speed $V_k$ which is directed along the tangent to the circle 4. The tooth 10 of the tool has a speed $V_t$ which is directed at right angles to the axis of rotation 8.

The speed Vt has a component $V_{rel}$ which runs in the direction of the centre line 6 of the tooth space, and faces away from the axis of rotation 2. This means that during the rotation of the crown wheel the engaged teeth have a relative speed in relation to the tooth space. The magnitude of said speed depends on the angel $\beta$ and satisfies the relation $V_{rel} = V_t \sin \beta$.

If the angle $\beta = 0$, i.e. the axis of rotation 8 intersects the axis of rotation 2 of the crown wheel, there is no relative speed between the tooth 10 and the tooth space, and this relative speed increases as the angle $\beta$ increases. In practice, every effort will be made to achieve an angle $\beta$ lying between 15° and 20°.

As will be explained below with reference to Fig. 2, this relative speed is used as the cutting speed for the tool.

In Fig. 2 the tooth space 5 is shown on a larger scale, with the tooth 10 of the element 9 in cross section. The tooth space 5 has a front tooth flank 5a and a rear tooth flank 5b. The tooth 10 of the tool element is provided on both tooth flanks with a cutting edge 11a and 11b, having a clearance angle $\xi_a$ and $\xi_b$, b respectively, and a rake angle $\eta_a$ and $\eta_b$ respectively. As a result of the relative speed $V_{rel}$, the tooth 10 moves radially outwards in the tooth space 5, and the two cutting edges 11a and 11b, which are in contact with the two tooth flanks of the crown wheel, carry out a machining operation. The cutting edge 11b is formed here by a ground-in recess 12, while at the cutting edge 11a a part is also ground away to form the rake angle $\eta_a$ which measures 2 -5°.

The tool 7 can be designed according to the principles described in Dutch Patent Application 87 03 103 filed by Applicants, and can comprise a number of thin cutting elements which are placed in succession and have dimensions gradually decreasing in the direction of machining. The tool designed as a cylindrical pinion in this case thus acquires a slightly conical outer periphery. This conical shape is, however, so slight that it has no influence on the mating between pinion and crown wheel. If the different tool elements are placed closely behind one another, thus are thin enough, the relative displacements of the different elements overlap, so that the entire width of the tooth flanks of the crown wheel is worked. In order to work the whole tooth flank, the tool can, however, be displaced in the direction of th line connecting the axis of rotation 2 to the point of intersection P of the pitch circle 4 with the vertical projection of the axis of rotation 8 of the tool. In Fig. 1 this lne coincides with the centre line 6 of the tooth space 5. During this displacement the position of the axis of rotation 8 and thus the angle $\beta$ is retained. It will be clear that this displacement does not make an essential contribution to the cutting speed of the tool.

A number of such tools can be fitted, distributed over the periphery of the crown wheel, in order to obtain an increase in the machining capacity.

The drive of the tool depends on the initial shape of the workpiece. If the teeth of the crown are already pre-shaped sufficiently accurately by means of casting, moulding or forging, the tool can run along freely with the rotary-driven workpiece. If the teeth of the crown wheel are too coarse, or are not pre-worked, the rotary drive of the tool will have to be coupled to that of the crown wheel.

## Claims

1. Process for producing a crown wheel (1) by means of a cutting (7) tool substantially in the form of a cylindrical gear which is suitable for meshing with the crown wheel, and the toothing of which is provided with a cutting edge with clearance angle along one or both tooth flanks, **characterized in that** during machining the tool is constantly in engagement with the crown wheel to be machined, the tool being placed in such a way that the axis of rotation (8) thereof crosses the axis of rotation (2) of the crown wheel at a specific distance and the tool has a slanted toothing system adapted to said distance.

2. Process according to Claim 1, **characterized in that** during the machining the tool (7) is displaced parallel to its axis of rotation in the direction of the line (6) which connects the point of intersection (P) of the pitch circle (4) of the crown wheel and vertical projection of the axis of rotation (8) of the tool to the axis of rotation (2) of the crown wheel in a plane which is at right angles to the axis of rotation of the crown wheel.

3. Process according to Claim 1 or 2, **characterized in that** the tool always machines the two opposite tooth flanks of a tooth space of the crown wheel.

4. Process according to Claim 2, **characterized in that** the crown wheel is machined simultaneously by a number of similar tools which are disposed along the periphery of the crown wheel.

5. Process according to one or more of the preceding Claims 1-3, **characterized in that** the crown wheel is rotary, and the tool rotates freely with it.

6. Process according to one or more of the preceding Claims 1-3, **characterized in that** the rotary drive of the tool is coupled to that of the crown wheel.

**_Fig:1._**

**_Fig:2._**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X,D | DE-B-1 074 366  (THE FELLOWS GEAR SHAPER CO.) <br> * Whole document * <br> --- | 1-6 | B 23 F    5/16 <br> B 23 F   21/10 |
| A | DE-A-1 552 794  (WERKSTÄTTEN FÜR PRÄZISIONSMECHANIK GEBRÜDER MILLER GmbH) <br> * Whole document * <br> --- | 1,5 | |
| A | W.F. BLADERGROEN: "Verspanende metaalbewerking", part 1, 1950, pages 337-338, De Technische Uitgeverij H. Stam, Haarlem, NL <br> * Page 338, lines 5-9; figures 414,415 * <br> --- | 3 | |
| A | US-A-2 642 780  (W.E. PACE) <br> * Column 3, lines 18-22; figure 1 * <br> --- | 4,6 | |
| A | DE-A-  600 315  (THE LEES BRADNER CO.) <br> * Claim * <br> --- | 5 | TECHNICAL FIELDS SEARCHED (Int. Cl.4) |
| A | DE-B-1 037 812  (MASCHINENFABRIK AUGSBURG-NÜRNBERG AG) <br> --- | | B 23 F |
| A | DE-C-  915 406  (J. PICANOL) <br> ----- | | |

The present search report has been drawn up for all claims

| Place of search | Date of completion of the search | Examiner |
|---|---|---|
| THE HAGUE | 11-04-1989 | MOET H.J.K. |

EPO FORM 1503 03.82 (P0401)